(19) Europäisches Patentamt
European Patent Office
Office européen des brevets

(11) **EP 3 734 899 A1**

(12) **DEMANDE DE BREVET EUROPEEN**

(43) Date de publication:
**04.11.2020 Bulletin 2020/45**

(51) Int Cl.:
*H04L 9/00* (2006.01)        *H04L 9/30* (2006.01)

(21) Numéro de dépôt: **20171988.7**

(22) Date de dépôt: **29.04.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **03.05.2019 FR 1904667**

(71) Demandeur: **Commissariat à l'énergie atomique et aux énergies alternatives**
**75015 Paris (FR)**

(72) Inventeur: **LOISEAU, Antoine**
**38054 GRENOBLE CEDEX 9 (FR)**

(74) Mandataire: **Brevalex**
**56, Boulevard de l'Embouchure**
**B.P. 27519**
**31075 Toulouse Cedex 2 (FR)**

(54) **PROCÉDÉ ET SYSTÈME DE MASQUAGE POUR LA CRYPTOGRAPHIE**

(57) L'invention concerne un circuit intégré comportant un ensemble de modules (3) de sécurisation configurés pour implémenter une opération de cryptographie asymétrique, ledit ensemble de modules (3) comprenant un module d'échange conditionnel (7) configuré pour échanger des premier et deuxième vecteurs ($R_0$, $R_1$) utilisés pour manipuler des bits d'entrées d'une clé secrète (k), ledit module d'échange conditionnel (7) étant adapté pour appliquer une formule d'échange comprenant une combinaison d'une condition (b) de bit d'entrée avec les premier et deuxième vecteurs ($R_0$, $R_1$) pour que ces derniers soient inter-changés uniquement si la condition (b) de bit d'entrée est égale à '1', le module d'échange conditionnel (7) comprenant un module de masquage (9) adapté pour faire appel à au moins un nombre aléatoire (r) pour masquer ladite formule d'échange avant qu'elle soit appliquée.

FIG.1

**Description**

**Domaine technique**

La présente invention concerne de manière générale le domaine de la cryptographie asymétrique et, plus particulièrement, la protection des opérations de cryptographie face à des attaques par canaux auxiliaires. Elle trouve notamment application dans le domaine des dispositifs embarqués ou les Internet des Objets.

**Etat de la technique antérieure**

Les implémentations de cryptographie asymétrique telle que le RSA ou la cryptographie basée sur les courbes elliptiques sont des techniques de chiffrement très utilisées dans beaucoup de domaines par exemple pour l'échange de clés, les signatures numériques, etc. En particulier, la cryptographie sur courbes elliptiques est économe en termes de longueur de clé et de temps de calcul, ce qui rend son utilisation particulièrement attractive dans les dispositifs embarqués ou les nœuds de l'Internet des Objets.

De manière générale, un dispositif embarqué comporte un logiciel autonome à ressources limitées comme par exemple un capteur connecté ou objet connecté. Ce genre de dispositifs présente des faiblesses physiques qui peuvent être exploitées par des attaques par canaux auxiliaires, ces attaques consistant à exploiter des fuites d'information au sein d'un calcul cryptographique en analysant la consommation de courant ou le rayonnement électromagnétique (EM). Ainsi, dans le cadre d'une implémentation de cryptographie asymétrique sur un système ou dispositif embarqué, il est important de se protéger contre ces attaques par canaux auxiliaires.

Les implémentations cryptographiques font l'objet de normes telles que la FIPS 186 qui est la norme la plus utilisée à l'heure actuelle. On peut trouver d'autres normes, notamment dans le cadre de la cryptographie sur courbes elliptiques, telles que les RFC 7748-8031-8032. Toutes ces normes donnent un cadre d'implémentation mais ne traitent que rarement des problèmes relatifs aux attaques par canaux auxiliaires.

En particulier, un microcontrôleur au sein d'un dispositif embarqué est amené à effectuer des opérations cryptographiques comportant des opérations conditionnelles qui peuvent être très vulnérables face à des extractions d'informations lors des attaques par canaux auxiliaires.

De nombreux articles traitent de ces problématiques et proposent des contremesures afin d'endiguer les fuites d'information. A titre d'exemple, l'article de Coron [1] propose des contremesures pour pallier à certaines faiblesses face à des attaques par canaux auxiliaires avancées.

Toutefois, les techniques des attaques se sont perfectionnées. Récemment, ces attaques se sont vues dotées de techniques d'apprentissages afin d'extraire l'information la plus pertinente dans des ensembles de traces de consommations de courant ou de rayonnement électromagnétique toujours plus gros. Le but de ces techniques d'attaque est de réduire la masse de données à son information utile.

L'objet de la présente invention est de proposer un procédé et un système de masquage remédiant aux inconvénients précités et fournissant des contremesures efficaces contre toute exploitation des fuites d'informations au sein d'une implémentation de cryptographie asymétrique.

**Présentation de l'invention**

La présente invention est définie par un procédé de masquage au sein d'une implémentation de cryptographie asymétrique, ladite implémentation comportant une opération d'échange conditionnelle entre des premier et deuxième vecteurs utilisés pour manipuler des bits d'entrées d'une clé secrète, ladite opération d'échange conditionnelle étant adaptée pour appliquer une formule d'échange (en temps constant) comprenant une combinaison d'une condition de bit d'entrée avec les premier et deuxième vecteurs pour que ces derniers soient inter-changés uniquement si la condition du bit d'entrée est égale à '1', l'opération d'échange conditionnelle faisant appel à au moins un nombre aléatoire pour masquer ladite formule d'échange avant de l'appliquer.

Ceci fournit des contremesures efficaces contre toute exploitation des fuites d'informations au sein d'un calcul cryptographique et en particulier fournit une très bonne protection face à des attaques par canaux auxiliaires avancées.

Avantageusement, le masquage de la formule d'échange comporte les étapes suivantes :

- tirer un premier nombre aléatoire,
- masquer la condition de bit d'entrée en la combinant avec ledit premier nombre aléatoire,
- remplacer la condition de bit d'entrée contenue dans ladite formule d'échange par la condition de bit d'entrée masquée formant ainsi une première formule intermédiaire,
- introduire dans ladite première formule intermédiaire un premier terme de compensation fonction du premier nombre aléatoire pour former une formule d'échange masquée de premier ordre équivalente à ladite formule d'échange d'origine.

Selon un mode de réalisation préféré de la présente invention, le masquage de la formule d'échange comporte en outre les étapes suivantes :

-   tirer un deuxième nombre aléatoire,
-   combiner le deuxième nombre aléatoire avec ledit premier nombre aléatoire,
-   remplacer le premier nombre aléatoire contenu dans le premier terme de compensation de ladite formule d'échange de premier ordre par ladite combinaison desdits premier et deuxième nombres aléatoires formant ainsi une deuxième formule intermédiaire,
-   introduire dans ladite deuxième formule intermédiaire un deuxième terme de compensation fonction du deuxième nombre aléatoire pour former une formule d'échange masquée de deuxième ordre équivalente à ladite formule d'échange d'origine.

Ceci permet de casser le lien entre les opérations effectuées et la condition du bit d'entrée permettant de se protéger contre des attaques par profilage (templates) utilisant des techniques d'apprentissage.
Selon un mode de réalisation, la formule d'échange d'origine est une formule d'échange arithmétique construite avec des opérateurs arithmétiques et est définie en fonction de la condition b de bit d'entrée, du premier vecteur $R_{0,i}$, et du deuxième vecteur $R_{1,i}$, selon les deux équations suivantes :

$$R_{0,i} = R_{0,i} + b\big(R_{1,i} - R_{0,i}\big) \qquad R_{1,i} = R_{1,i} - b\big(R_{1,i} - R_{0,i}\big)$$

et la formule d'échange masquée de deuxième ordre est construite à partir de ladite formule d'échange arithmétique en utilisant en outre le premier nombre aléatoire $r_0$, et le deuxième nombre aléatoire $r_1$, selon les deux équations suivantes :

$$R_{0,i} = R_{0,i} + (r_0 + b)\big(R_{1,i} - R_{0,i}\big) - (r_0 + r_1)\big(R_{1,i} - R_{0,i}\big) + r_1\big(R_{1,i} - R_{0,i}\big)$$

$$R_{1,i} = R_{1,i} - (r_0 + b)\big(R_{1,i} - R_{0,i}\big) + (r_0 + r_1)\big(R_{1,i} - R_{0,i}\big) - r_1\big(R_{1,i} - R_{0,i}\big)$$

Avantageusement, le masquage de la formule d'échange fait appel à N nombres aléatoires pour construire une formule d'échange masquée d'ordre N supérieur à deux.
Ceci permet d'augmenter davantage la protection contre toute sorte d'attaque sans pour autant alourdir de manière significative les étapes de calcul. En effet, le temps de calcul concernant les étapes de masquage reste très négligeable devant celui des étapes de cryptographie.
Avantageusement, la formule d'échange masquée d'ordre N est construite avec des opérateurs arithmétiques et est définie en fonction de la condition $b$ de bit d'entrée, du premier vecteur $R_{0,i}$, du deuxième vecteur $R_{1,i}$, et de N nombres aléatoires $r_0,...., r_{N-1}$, selon les deux équations suivantes :

$$R_{0,i} = R_{0,i} + (r_0 + b)(R_{1,i} - R_{0,i}) + \left(\sum_{n=1}^{N-1} (-1)^n (r_{n-1} + r_n)(R_{1,i} - R_{0,i})\right)$$
$$+ (-1)^N r_{N-1}(R_{1,i} - R_{0,i})$$

$$R_{1,i} = R_{1,i} - (r_0 + b)(R_{1,i} - R_{0,i}) - \left( \sum_{n=1}^{N-1} (-1)^n (r_{n-1} + r_n)(R_{1,i} - R_{0,i}) \right)$$

$$- (-1)^N r_{N-1}(R_{1,i} - R_{0,i})$$

Selon un autre mode de réalisation, la formule d'échange d'origine est une formule d'échange logique construite avec des opérateurs logiques 'ET' et 'OU EXCLUSIVE' et est définie en fonction de la condition $b$ de bit d'entrée, du premier vecteur $R_{0,i}$, et du deuxième vecteur $R_{1,i}$, selon les deux équations suivantes :

$$R_{0,i} = R_{0,i} \oplus b \wedge \left( R_{1,i} \oplus R_{0,i} \right) \qquad R_{1,i} = R_{1,i} \oplus b \wedge \left( R_{1,i} \oplus R_{0,i} \right)$$

et la formule d'échange masquée d'ordre N est définie en fonction de la condition b de bit d'entrée, du premier vecteur $R_{0,i}$, du deuxième vecteur $R_{1,i}$, et de N nombres aléatoires $r_0$,...., $r_{N-1}$, selon les deux équations suivantes :

$$R_{0,i} = R_{0,i} \oplus (r_0 \oplus b) \wedge \left( R_{1,0} \oplus R_{0,i} \right) \oplus \left( \bigoplus_{n=1}^{N-1} (r_{n-1} \oplus r_n) \wedge \left( R_{1,i} \oplus R_{0,i} \right) \right) \oplus r_{N-1}$$

$$\wedge \left( R_{1,i} \oplus R_{0,i} \right)$$

$$R_{1,i} = R_{1,i} \oplus (r_0 \oplus b) \wedge \left( R_{1,0} \oplus R_{0,i} \right) \oplus \left( \bigoplus_{n=1}^{N-1} (r_{n-1} \oplus r_n) \wedge \left( R_{1,i} \oplus R_{0,i} \right) \right) \oplus r_{N-1}$$

$$\wedge \left( R_{1,i} \oplus R_{0,i} \right)$$

Selon encore un autre mode de réalisation, la formule d'échange d'origine est une formule d'échange arithmétique alternative construite avec des opérateurs arithmétiques et est définie en fonction de la condition $b$ de bit d'entrée, du premier vecteur $R_{0,i}$, et du deuxième vecteur $R_{1,i}$, selon les deux équations suivantes :

$$R_{0,i} = bR_{1,i} + (1 - b)R_{0,i} \qquad R_{1,i} = bR_{0,i} + (1 - b)R_{1,i}$$

et la formule d'échange masquée d'ordre N est construite à partir de ladite formule d'échange arithmétique alternative en utilisant en outre N nombres aléatoires $r_0$,...., $r_{N-1}$, selon les deux équations suivantes :

$$R_{0,i} = (b + r_0)R_{1,i} + \left( 1 - (b + r_1) \right)R_{0,i} - (r_0 + r_2)R_{1,i} - (r_1 + r_2)R_{0,i}$$

$$+ \left( \sum_{n=2}^{N-1} (-1)^n (r_{n-1} + r_n) \left( R_{1,i} + R_{0,i} \right) \right) - (-1)^{N-1} r_{N-1} \left( R_{1,i} + R_{0,i} \right)$$

$$R_{1,i} = (b + r_0)R_{0,i} + \big(1 - (b + r_1)\big)R_{1,i} - (r_0 + r_2)R_{0,i} - (r_1 + r_2)R_{1,i}$$

$$+ \left(\sum_{n=2}^{N-1} (-1)^n (r_{n-1} + r_n)\big(R_{1,i} + R_{0,i}\big)\right) - (-1)^{N-1} r_{N-1}\big(R_{1,i} + R_{0,i}\big)$$

Selon un mode de réalisation, la cryptographie asymétrique est basée sur des courbes elliptiques comportant une opération de multiplication scalaire entre un point générateur P d'une courbe elliptique et la clé secrète k.

La cryptographie sur courbes elliptiques est une technique de chiffrement économe en termes de longueur de clé et de temps de calcul, ce qui rend son utilisation particulièrement attractive dans des dispositifs pauvres en ressources.

Selon un autre mode de réalisation, la cryptographie asymétrique est une cryptographie de type RSA.

L'invention vise aussi un circuit intégré comportant un ensemble de modules de sécurisation configurés pour implémenter une opération de cryptographie asymétrique, ledit ensemble de modules comprenant un module d'échange conditionnel configuré pour échanger des premier et deuxième vecteurs utilisés pour manipuler des bits d'entrées d'une clé secrète, ledit module d'échange conditionnel étant adapté pour appliquer une formule d'échange (en temps constant) comprenant une combinaison d'une condition de bit d'entrée avec les premier et deuxième vecteurs pour que ces derniers soient inter-changés uniquement si la condition de bit d'entrée est égale à '1', le module d'échange conditionnel comprenant un module de masquage adapté pour faire appel à au moins un nombre aléatoire pour masquer ladite formule d'échange avant qu'elle soit appliquée, le module de masquage étant configuré pour réaliser le masquage de la formule d'échange selon les étapes suivantes :

- tirer un premier nombre aléatoire,
- masquer la condition de bit d'entrée en la combinant avec ledit premier nombre aléatoire,
- remplacer la condition de bit d'entrée contenue dans ladite formule d'échange par la condition de bit d'entrée masquée formant ainsi une première formule intermédiaire,
- introduire dans ladite première formule intermédiaire un premier terme de compensation fonction du premier nombre aléatoire pour former une formule d'échange masquée de premier ordre équivalente à ladite formule d'échange d'origine.

L'invention vise également un dispositif embarqué comportant un microcontrôleur configuré pour implémenter le procédé de masquage selon l'une quelconque des caractéristiques ci-dessus.

L'invention vise aussi un système de masquage au sein d'un circuit intégré configuré pour implémenter une opération de cryptographie asymétrique, ladite implémentation comportant une opération d'échange conditionnelle entre des premier et deuxième vecteurs utilisés pour manipuler des bits d'entrées d'une clé secrète, ladite opération d'échange conditionnelle étant adaptée pour appliquer une formule d'échange (en temps constant) comprenant une combinaison d'une condition de bit d'entrée avec les premier et deuxième vecteurs pour que ces derniers soient inter-changés uniquement si la condition de bit d'entrée est égale à '1', ledit système faisant appel à au moins un nombre aléatoire pour masquer ladite formule d'échange avant qu'elle soit appliquée, le système de masquage étant configuré pour réaliser le masquage de la formule d'échange selon les étapes suivantes :

- tirer un premier nombre aléatoire,
- masquer la condition de bit d'entrée en la combinant avec ledit premier nombre aléatoire,
- remplacer la condition de bit d'entrée contenue dans ladite formule d'échange par la condition de bit d'entrée masquée formant ainsi une première formule intermédiaire,
- introduire dans ladite première formule intermédiaire un premier terme de compensation fonction du premier nombre aléatoire pour former une formule d'échange masquée de premier ordre équivalente à ladite formule d'échange d'origine.

**Brève description des figures**

[Fig. 1] illustre de manière schématique un système de masquage au sein d'un circuit intégré adapté pour implémenter une opération de cryptographie asymétrique, selon un mode de réalisation de l'invention ; et

[Fig. 2] et

[Fig. 3] sont des organigrammes illustrant de manière schématique un procédé de masquage au sein d'une opération de cryptographie asymétrique, selon un mode de réalisation de l'invention.

**Description des modes de réalisation**

Le principe de l'invention est d'utiliser une technique de masquage qui déjoue toute fuite d'information pouvant être exploitée lors des attaques par canaux auxiliaires.

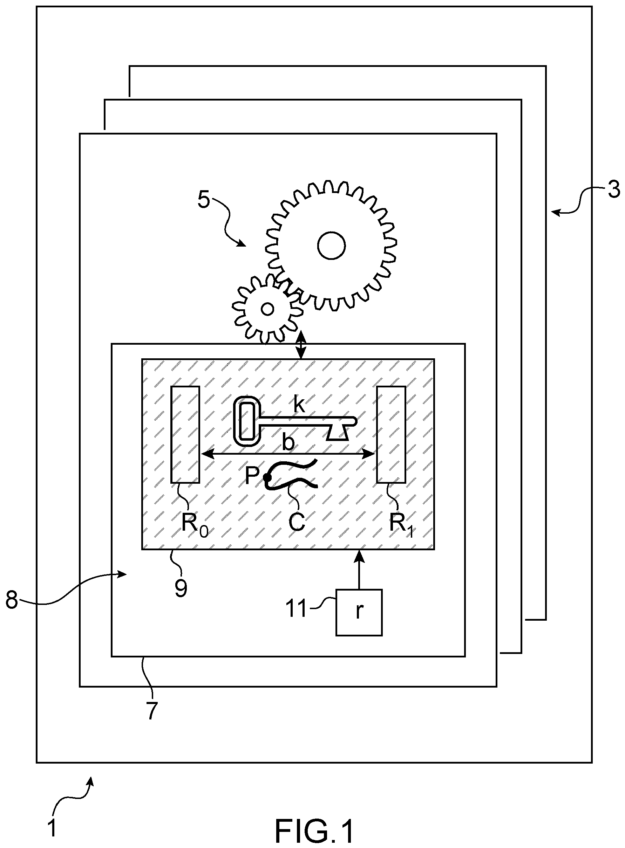

La Fig. 1 illustre de manière schématique un système de masquage au sein d'un circuit intégré adapté pour implémenter une opération de cryptographie asymétrique, selon un mode de réalisation de l'invention.

Le circuit intégré 1 est un microprocesseur ou un microcontrôleur comportant un ensemble de modules 3 ou briques matériels et/ou logiciels de sécurisation configurés pour implémenter des opérations de cryptographie asymétrique 5.

Une cryptographie asymétrique 5 est une technique de chiffrement de type RSA ou à base de courbes elliptiques C dont le but est de garantir la confidentialité des données. En particulier, la cryptographie sur courbes elliptiques exploite la difficulté de résoudre le problème du logarithme discret ou DLP (*Discrete Logarithm Problem*) sur un groupe cyclique fini. Cette technique comporte une étape de multiplication scalaire manipulant directement les bits b d'une clé secrète k et un point générateur P sur une courbe C pour former la clé publique correspondante donnée par les coordonnées de kP. Cette manipulation des bits b de la clé secrète k utilise des premier et deuxième registres ou vecteurs $R_0$ et $R_1$.

On notera que la recherche de la clé privée k à partir de la clé publique et du point générateur P est plus ardue que le problème DLP sur les corps finis et, dans l'état actuel, impossible à résoudre dans un temps polynomial. Ces bits sont donc très sensibles et ne doivent pas fuir par canaux auxiliaires. Pour ce faire, généralement on utilise un algorithme de multiplication scalaire ne laissant fuir aucune information. L'algorithme de l'Echelle de Montgomery [2] est souvent employé car les mêmes opérations sont effectuées que l'on traite un bit '0' ou un bit '1'. L'algorithme 1 ci-dessous présente les différentes étapes de l'Echelle de Montgomery.

---

**Algorithm 1** Montgomery Ladder

**Require:** $P$, $k = (k_{t-1}, ..., k_0)_2$

1:    $R_0 \leftarrow \mathcal{O}$
2:    $R_1 \leftarrow P$
3:    **for** $j = t - 1$ **to** 0 **do**
4:        **if** $k_j = 0$ **then**
5:            $R_1 \leftarrow R_0 + R_1$
6:            $R_0 \leftarrow 2R_0$
7:        **else**
8:            $R_0 \leftarrow R_0 + R_1$
9:            $R_1 \leftarrow 2R_1$
10:       **end if**
11:    **end for**
12:    **return** $R_0 = kP$, $R_1 = kP + P$

---

Toutefois, à l'étape 4 de l'Algorithme 1, on a une instruction conditionnelle 'IF' qui permet de différencier les calculs entre un bit à '0' et un bit à '1'. Une des contraintes d'implémentations sécurisées est d'avoir une implémentation en temps constant, i.e. que le temps d'exécution ne dépend pas des bits b de la clé k. Pour ce faire, on évite d'utiliser des instructions conditionnelles qui, de fait, n'induisent pas le même temps d'exécutions selon la condition d'entrée. Une technique répandue pour pallier à cela est d'utiliser un algorithme d'échange conditionnel de vecteurs en temps constant, ou « swap » conditionnel (cswap). On change alors légèrement l'algorithme précédent en un algorithme d'Echelle de Montgomery en temps constant de la manière suivante :

---

**Algorithm 2** Constant Time Montgomery Ladder

**Require:** $P$, $k = (k_{t-1},...,k_0)_2$

1:    $R_0 \leftarrow \mathcal{O}$
2:    $R_1 \leftarrow P$
3:    **for** $j = t - 1$ **to** 0 **do**

---

(suite)

| | Algorithm 2 Constant Time Montgomery Ladder |
|---|---|
| 4: | $cswap(R_1, R_0, k_j)$ |
| 5: | $R_1 \leftarrow R_0 + R_1$ |
| 6: | $R_0 \leftarrow 2R_0$ |
| 7: | $cswap(R_1, R_0, k_j)$ |
| 8: | **end for** |
| 9: | **return** $R_0 = kP, R_1 = kP + P$ |

Ainsi, pour implémenter l'algorithme 2, l'ensemble de modules 3 du circuit intégré 1 comprend un module d'échange conditionnel 7 configuré pour échanger les premier et deuxième vecteurs $R_0$ et $R_1$ utilisés pour manipuler les bits b d'entrées de la clé secrète k.

Le module d'échange conditionnel 7 applique la même formule à tous les mots formant les premier et deuxième vecteurs $R_0$ et $R_1$. Cette formule prend en entrée une condition b de bit d'entrée de la clé secrète k et elle ne change pas le résultat si b=0 et elle échange $R_0$ et $R_1$ si b = 1.

Pour effectuer un échange entre les deux vecteurs $R_0$ et $R_1$ composés de $n$ mots $R_{0,i}$ et $R_{1,i}$ on utilise une formule d'échange qu'on peut définir de la manière suivante :

$$F\big(b, R_{0,i}, R_{1,i}\big) = F\big(b, R_{v,i}\ ; v = 0\ ou\ 1\big) \qquad (1)$$

tel que

$$R_{vi} = \begin{cases} R_{v,i} & b = 0 \\ R_{1-v,i} & b = 1 \end{cases} \qquad (2)$$

Cette formule d'échange en temps constant comprend une combinaison de la condition b de bit d'entrée avec les premier et deuxième vecteurs $R_{0,i}$ et $R_{1,i}$ pour que ces derniers soient inter-changés uniquement si la condition b de bit d'entrée est égale à '1'. On notera que la formule d'échange peut être une formule logique ou arithmétique et peut être exprimée de différentes manières.

Un exemple d'une formule d'échange arithmétique (i.e. construite avec des opérateurs arithmétiques) est défini en fonction de la condition b de bit d'entrée, du premier vecteur $R_{0,i}$, et du deuxième vecteur $R_{1,i}$, selon les deux équations suivantes :

$$R_{0,i} = R_{0,i} + b\big(R_{1,i} - R_{0,i}\big) \qquad R_{1,i} = R_{1,i} - b\big(R_{1,i} - R_{0,i}\big) \qquad (3)$$

Ces équations de la formule d'échange indiquent que si la condition b de bit d'entrée est égale à '0', les mots des premier et deuxième vecteurs $R_{0,i}$ et $R_{1,i}$ ne changent pas tandis que, que si la condition b de bit d'entrée est égale à '1', les mots des premier et deuxième vecteurs $R_{0,i}$ et $R_{1,i}$ sont inter-changés. Cette technique d'échange conditionnel se retrouve dans des bibliothèques de logiciels embarqués tel que mbedTLS.

Cependant, cette formule d'échange (3) n'est pas exempte de défauts. En effet, si l'on considère seulement le résultat de la multiplication par la condition b, alors le résultat est nul si b = 0 et différent de 0 si b = 1. Ainsi, cette multiplication induit une grande différence dans le poids de Haming du résultat (i.e. le nombre de bit à 1). En particulier, si b=0, le poids de Haming est égal à zéro et si b=1, le poids de Haming est différent de zéro. Une telle différence est facilement distinguable par des attaques par canaux auxiliaires de type attaques par template [3]. Ce genre d'attaque permet ainsi de distinguer une multiplication par 0 ou par 1.

La présente invention résout ce problème en masquant l'opération d'échange conditionnelle cswap. En effet, conformément à la présente invention, le module d'échange conditionnel 7 comprend un système de masquage 8 comprenant un module de masquage 9 et un générateur de nombres aléatoire 11. Le module de masquage 9 est adapté pour faire appel à au moins un nombre aléatoire r issu du générateur de nombres aléatoire 11 pour masquer la formule d'échange avant qu'elle soit appliquée. La dimension du nombre aléatoire r est sélectionnée comme étant égale à la taille de l'architecture utilisée dans le circuit intégré 1. Par exemple, si l'architecture est de 32 bits (ou 64 bits), le nombre aléatoire r est également de 32 bits (ou 64 bits respectivement).

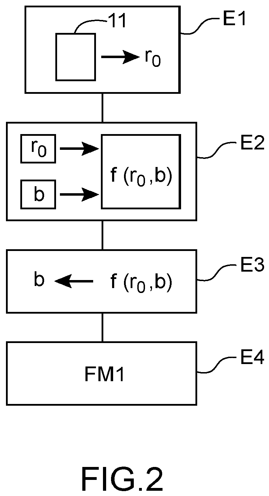

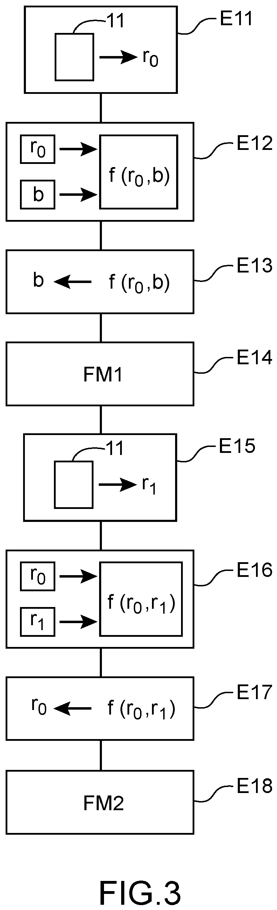

Les Figs. 2 et 3 sont des organigrammes illustrant de manière schématique un procédé de masquage au sein d'une opération de cryptographie asymétrique, selon un mode de réalisation de l'invention.

Les étapes E1-E4 de la Fig. 2 illustrent le masquage de la formule d'échange au moyen d'un nombre aléatoire $r_0$.

A l'étape E1, le module de masquage 9, et plus particulièrement le générateur de nombres aléatoires 11, est adapté pour tirer un premier nombre aléatoire $r_0$ qui va faire office de masquage.

A l'étape E2, le module de masquage 9 est adapté pour masquer le bit d'entrée b en le combinant avec le premier nombre aléatoire $r_0$. Selon la nature de la formule d'échange (i.e. arithmétique ou logique), la combinaison $f(r_0, b)$ entre le bit d'entrée $b$ et le premier nombre aléatoire $r_0$ est réalisée avec un opérateur arithmétique de type 'addition' ou un opérateur logique de type 'OU EXCLUSIVE'.

Par exemple, dans la formule d'échange arithmétique selon les deux équations (3), le premier nombre aléatoire $r_0$ est ajouté à la condition b de bit d'entrée pour former un bit d'entrée masqué $'r_0 + b'$.

A l'étape E3, le module de masquage 9 est adapté pour remplacer la condition b de bit d'entrée contenu dans la formule d'échange par le bit d'entrée masqué (par exemple $r_0 + b$) formant ainsi une première formule intermédiaire.

A l'étape E4, le module de masquage 9 est adapté pour introduire dans la première formule intermédiaire un premier terme de compensation fonction du premier nombre aléatoire pour former une formule d'échange masquée FM1 de premier ordre, équivalente à la formule d'échange d'origine.

Par exemple, dans la formule d'échange arithmétique selon les deux équations (3), le premier nombre aléatoire $r_0$ est ajouté à la condition b de bit d'entrée pour former un bit d'entrée masqué $'r_0 + b'$. Ensuite, la condition b de bit d'entrée contenue dans la formule d'échange d'origine est remplacée par le bit d'entrée masqué $'r_0 + b'$ pour former la formule intermédiaire suivante :

$$R_{0,i} = R_{0,i} + (r_0 + b)(R_{1,i} - R_{0,i}) \quad (4)$$

$$R_{1,i} = R_{1,i} - (r_0 + b)(R_{1,i} - R_{0,i}) \quad (5)$$

Afin de rééquilibrer la formule, un premier terme de compensation $'r_0(R_{1,i} - R_{0,i})'$ est introduit dans les équations (4) et (5) de la formule intermédiaire. Ceci permet la formation de la formule d'échange masquée de premier ordre suivante :

$$R_{0,i} = R_{0,i} + (r_0 + b)(R_{1,i} - R_{0,i}) - r_0(R_{1,i} - R_{0,i}) \quad (6)$$

$$R_{1,i} = R_{1,i} - (r_0 + b)(R_{1,i} - R_{0,i}) + r_0(R_{1,i} - R_{0,i}) \quad (7)$$

Les équations (6) et (7) sont mathématiquement équivalentes aux équations (3) de la formule d'échange d'origine.

Le masquage ci-dessus fournit une protection contre beaucoup d'attaques par canaux auxiliaires. Toutefois, le masque appliqué peut ne pas être suffisant face à certaines attaques utilisant des techniques d'apprentissage. En effet, si le bit de condition b est nul alors les deux multiplications de la formule sont identiques alors que si b = 1, les deux multiplications sont différentes. Or, certaines attaques avancées par templates peuvent distinguer si l'on effectue ou non la même opération.

Avantageusement, l'organigramme selon la Fig. 3 permet de casser le lien qui existe entre les opérations effectuées et le bit de condition b.

Les étapes E11-E14 sont identiques aux étapes E1-E4 de la Fig.2 et concernent le masquage de la formule d'échange avec un premier nombre aléatoire pour former la formule d'échange masquée de premier ordre selon les équations (6) et (7).

Par ailleurs, à l'étape E15, le module de masquage 9 est adapté pour tirer un deuxième nombre aléatoire $r_1$.

A l'étape E16, le module de masquage 9 est adapté pour combiner le deuxième nombre aléatoire $r_1$ avec le

premier nombre aléatoire $r_0$. La combinaison f($r_0$, $r_1$) entre les premier et deuxième nombres aléatoires est réalisée avec un opérateur arithmétique (par exemple, $r_0 + r_1$) ou logique selon la nature de la formule d'échange d'origine.

A l'étape E17, le module de masquage 9 est adapté pour remplacer le premier nombre aléatoire $r_0$ contenu dans le premier terme de compensation de la formule d'échange de premier ordre FM1 (calculée à l'étape E14) par la combinaison f($r_0$, $r_1$) des premier et deuxième nombres aléatoires (calculée à l'étape E16), formant ainsi une deuxième formule intermédiaire.

A l'étape E18, le module de masquage 9 est adapté pour introduire dans la deuxième formule d'échange intermédiaire un deuxième terme de compensation fonction du deuxième nombre aléatoire. Ceci forme une formule d'échange masquée FM2 de deuxième ordre, équivalente à ladite formule d'échange d'origine.

Par exemple, dans la formule d'échange de premier ordre selon les deux équations (6) et (7), le deuxième nombre aléatoire $r_1$ est ajouté au premier nombre aléatoire $r_0$ pour former la somme de nombres aléatoires '$r_0 + r_1$'. Ensuite, le premier nombre aléatoire $r_0$ contenu dans le premier terme de compensation de la formule d'échange de premier ordre (6) et (7) est remplacé par la somme de nombres aléatoires '$r_0 + r_1$'. Ceci forme la deuxième formule intermédiaire suivante :

$$R_{0,i} = R_{0,i} + (r_0 + b)(R_{1,i} - R_{0,i}) - (r_0 + r_1)(R_{1,i} - R_{0,i}) \quad (8)$$

$$R_{1,i} = R_{1,i} - (r_0 + b)(R_{1,i} - R_{0,i}) + (r_0 + r_1)(R_{1,i} - R_{0,i}) \quad (9)$$

Finalement, la formule est rééquilibrée en introduisant un deuxième terme de compensation '$r_1(R_{1,i} - R_{0,i})$' dans les équations (8) et (9) de la deuxième formule intermédiaire pour former la formule d'échange masquée de deuxième ordre suivante :

$$R_{0,i} = R_{0,i} + (r_0 + b)(R_{1,i} - R_{0,i}) - (r_0 + r_1)(R_{1,i} - R_{0,i}) + r_1(R_{1,i} - R_{0,i}) \quad (10)$$

$$R_{1,i} = R_{1,i} - (r_0 + b)(R_{1,i} - R_{0,i}) + (r_0 + r_1)(R_{1,i} - R_{0,i}) - r_1(R_{1,i} - R_{0,i}) \quad (11)$$

Cette formule est mathématiquement équivalente à la formule d'échange d'origine (3) tout en ayant deux masques avec trois multiplications fournissant une protection largement suffisante contre des attaques par templates utilisant des techniques d'apprentissage. En effet, on peut remarquer que quel que soit le bit de condition b, les trois multiplications dans la formule d'échange masquée de deuxième ordre sont différentes et le résultat est non nul. Ainsi, aucune corrélation n'existe entre le poids de Haming et le bit de condition b.

Avantageusement, le surplus de calcul engendré par cette contremesure est minime. En effet, pour un masquage de deuxième ordre, on utilise seulement deux instructions supplémentaires ce qui induit un temps de calcul additionnel insignifiant face à l'ensemble du calcul cryptographique (par exemple, sur courbes elliptiques) effectué lors d'une signature électronique par exemple.

La formule de masquage peut être généralisée pour un masque d'ordre N définie en fonction de la condition b de bit d'entrée, du premier vecteur $R_{0,i}$, du deuxième vecteur $R_{1,i}$, et de N nombres aléatoires $r_0, \ldots, r_{N-1}$, selon les deux équations suivantes :

$$R_{0,i} = R_{0,i} + (r_0 + b)(R_{1,i} - R_{0,i}) + \left(\sum_{n=1}^{N-1} (-1)^n (r_{n-1} + r_n)(R_{1,i} - R_{0,i})\right)$$
$$+ (-1)^N r_{N-1}(R_{1,i} - R_{0,i}) \quad (12)$$

$$R_{1,i} = R_{1,i} - (r_0 + b)(R_{1,i} - R_{0,i}) - \left( \sum_{n=1}^{N-1} (-1)^n (r_{n-1} + r_n)(R_{1,i} - R_{0,i}) \right)$$

$$- (-1)^N r_{N-1} (R_{1,i} - R_{0,i}) \quad (13)$$

Ce masque généralisé qui fait appel à N nombres aléatoires permet d'anticiper une évolution encore plus sophistiquée des attaques et augmente ainsi la protection dans la durée contre ces attaques.

En variante, la formule d'échange d'origine définie par les équations (3) peut être réécrite de la manière suivante :

$$R_{0,i} = bR_{1,i} + (1-b)R_{0,i} \qquad R_{1,i} = bR_{0,i} + (1-b)R_{1,i} \quad (14)$$

Comme précédemment, cette formule d'échange alternative est construite avec des opérateurs arithmétiques et est définie en fonction de la condition b de bit d'entrée, du premier vecteur $R_{0,i}$ et du deuxième vecteur $R_{1,i}$.

Les mêmes étapes de l'algorithme représenté sur la Fig. 3 peuvent être appliquées de manière récurrente pour construire une formule d'échange masquée d'ordre N (N≥1) à partir de la formule d'échange arithmétique alternative en utilisant les N nombres aléatoires $r_0,...., r_{N-1}$, selon les deux équations suivantes :

$$R_{0,i} = (b + r_0)R_{1,i} + \left(1 - (b + r_1)\right)R_{0,i} - (r_0 + r_2)R_{1,i} - (r_1 + r_2)R_{0,i}$$

$$+ \left( \sum_{n=2}^{N-1} (-1)^n (r_{n-1} + r_n)(R_{1,i} + R_{0,i}) \right) - (-1)^{N-1} r_{N-1}(R_{1,i} + R_{0,i})$$

$$R_{1,i} = (b + r_0)R_{0,i} + \left(1 - (b + r_1)\right)R_{1,i} - (r_0 + r_2)R_{0,i} - (r_1 + r_2)R_{1,i}$$

$$+ \left( \sum_{n=2}^{N-1} (-1)^n (r_{n-1} + r_n)(R_{1,i} + R_{0,i}) \right) - (-1)^{N-1} r_{N-1}(R_{1,i} + R_{0,i})$$

Encore en variante, on peut commencer par une formule d'échange logique construite avec des opérateurs logiques 'ET' et 'OU EXCLUSIVE' en fonction de la condition b de bit d'entrée, du premier vecteur $R_{0,i}$ et du deuxième vecteur $R_{1,i}$ selon les deux équations suivantes :

$$R_{0,i} = R_{0,i} \oplus b \wedge \left(R_{1,i} \oplus R_{0,i}\right) \qquad R_{1,i} = R_{1,i} \oplus b \wedge \left(R_{1,i} \oplus R_{0,i}\right) \quad (17)$$

Cette fois ci, la condition b n'est plus un simple bit 0 ou 1 mais 0 si l'échange conditionnel 'cswap' ne doit avoir aucun effet ou 0xFF...FF si le cswap doit avoir un effet.

Les mêmes étapes de l'algorithme représenté sur la Fig. 3 peuvent être appliquées de manière récurrente pour construire une formule d'échange masquée d'ordre N (N≥1) à partir de la formule d'échange logique en utilisant N nombres aléatoires $r_0,...., r_{N-1}$, selon les deux équations suivantes :

$$R_{0,i} = R_{0,i} \oplus (r_0 \oplus b) \wedge \left(R_{1,0} \oplus R_{0,i}\right) \oplus \left( \bigoplus_{n=1}^{N-1} (r_{n-1} \oplus r_n) \wedge \left(R_{1,i} \oplus R_{0,i}\right) \right) \oplus r_{N-1}$$

$$\wedge \left(R_{1,i} \oplus R_{0,i}\right) \quad (18)$$

$$R_{1,i} = R_{1,i} \oplus (r_0 \oplus b) \wedge \left(R_{1,0} \oplus R_{0,i}\right) \oplus \left(\bigoplus_{n=1}^{N-1} (r_{n-1} \oplus r_n) \wedge \left(R_{1,i} \oplus R_{0,i}\right)\right) \oplus r_{N-1}$$

$$\wedge \left(R_{1,i} \oplus R_{0,i}\right) (19)$$

La présente invention peut très largement être utilisée dans des dispositifs embarqués. Par dispositif embarqué, on entend un dispositif comportant un logiciel autonome à ressources limitées comme par exemple un capteur connecté ou objet connecté de type montre connectée.

On notera que la présente invention peut s'appliquer à toutes les implémentations cryptographiques embarquées comme par exemple mbedTLS de ARM ou OpenSSL et OpenSSH. De manière générale, le surplus de calcul engendré par cette contremesure est minime. En effet, pour un masquage de deuxième ordre, il faut seulement deux instructions supplémentaires ce qui induit un temps de calcul additionnel insignifiant face à l'ensemble du calcul sur courbes elliptiques effectué lors d'une signature électronique par exemple.

**Biographie**

1- J.-S. Coron, « gainst Differential Power Analysis for Elliptic Curve Cryptosystems », présenté à Cryptographique Hardware and Embedded Systems, 1999.

2- M. Joye et S.-M. Yen, « The Montgomery powering ladder », in International Workshop on Cryptographic Hardware and Embedded Systems, 2002, p. 291-302.

3- L. Batina, Ł. Chmielewski, L. Papachristodoulou, P. Schwabe, et M. Tunstall, « Online template attacks », Journal of Cryptographic Engineering, août 2017.

**Revendications**

1.   Procédé de masquage au sein d'une implémentation de cryptographie asymétrique, ladite implémentation comportant une opération d'échange conditionnelle entre des premier et deuxième vecteurs ($R_0$, $R_1$) utilisés pour manipuler des bits d'entrées d'une clé secrète (k), ladite opération d'échange conditionnelle étant adaptée pour appliquer une formule d'échange comprenant une combinaison d'une condition (b) de bit d'entrée avec les premier et deuxième vecteurs pour que ces derniers soient inter-changés uniquement si la condition (b) du bit d'entrée est égale à '1', **caractérisé en ce que** l'opération d'échange conditionnelle fait appel à au moins un nombre aléatoire pour masquer ladite formule d'échange avant de l'appliquer, le masquage de la formule d'échange comportant les étapes suivantes :

- tirer un premier nombre aléatoire,
- masquer la condition (b) de bit d'entrée en la combinant avec ledit premier nombre aléatoire,
- remplacer la condition de bit d'entrée contenu dans ladite formule d'échange par la condition de bit d'entrée masquée formant ainsi une première formule intermédiaire,
- introduire dans ladite première formule intermédiaire un premier terme de compensation fonction du premier nombre aléatoire pour former une formule d'échange masquée de premier ordre équivalente à ladite formule d'échange d'origine.

2.   Procédé selon la revendication 1, **caractérisé en ce que** le masquage de la formule d'échange comporte en outre les étapes suivantes :

- tirer un deuxième nombre aléatoire,
- combiner le deuxième nombre aléatoire avec ledit premier nombre aléatoire,
- remplacer le premier nombre aléatoire contenu dans le premier terme de compensation de ladite formule d'échange de premier ordre par ladite combinaison desdits premier et deuxième nombres aléatoires formant ainsi une deuxième formule intermédiaire,
- introduire dans ladite deuxième formule intermédiaire un deuxième terme de compensation fonction du deuxième nombre aléatoire pour former une formule d'échange masquée de deuxième ordre équivalente à ladite formule d'échange d'origine.

**3.** Procédé selon la revendication 2, **caractérisé en ce que** la formule d'échange d'origine est une formule d'échange arithmétique construite avec des opérateurs arithmétiques et est définie en fonction de la condition (b) de bit d'entrée, du premier vecteur $R_{0,i}$, et du deuxième vecteur $R_{1,i}$, selon les deux équations suivantes :

$$R_{0,i} = R_{0,i} + b\big(R_{1,i} - R_{0,i}\big) \qquad R_{1,i} = R_{1,i} - b\big(R_{1,i} - R_{0,i}\big)$$

et **en ce que** la formule d'échange masquée de deuxième ordre est construite à partir de ladite formule d'échange arithmétique en utilisant en outre le premier nombre aléatoire $r_0$, et le deuxième nombre aléatoire $r_1$, selon les deux équations suivantes :

$$R_{0,i} = R_{0,i} + (r_0 + b)\big(R_{1,i} - R_{0,i}\big) - (r_0 + r_1)\big(R_{1,i} - R_{0,i}\big) + r_1\big(R_{1,i} - R_{0,i}\big)$$

$$R_{1,i} = R_{1,i} - (r_0 + b)\big(R_{1,i} - R_{0,i}\big) + (r_0 + r_1)\big(R_{1,i} - R_{0,i}\big) - r_1\big(R_{1,i} - R_{0,i}\big)$$

**4.** Procédé selon l'une quelconque des revendications précédentes, **caractérisé en ce que** le masquage de la formule d'échange fait appel à N nombres aléatoires pour construire une formule d'échange masquée d'ordre N supérieur à deux.

**5.** Procédé selon la revendication 4, **caractérisé en ce que** la formule d'échange masquée d'ordre N est construite avec des opérateurs arithmétiques et est définie en fonction de la condition $b$ de bit d'entrée, du premier vecteur $R_{0,i}$, du deuxième vecteur $R_{1,i}$, et de N nombres aléatoires $r_0$,...., $r_{N-1}$, selon les deux équations suivantes :

$$R_{0,i} = R_{0,i} + (r_0 + b)\big(R_{1,i} - R_{0,i}\big) + \left(\sum_{n=1}^{N-1}(-1)^n(r_{n-1} + r_n)\big(R_{1,i} - R_{0,i}\big)\right)$$
$$+ (-1)^N r_{N-1}(R_{1,i} - R_{0,i})$$

$$R_{1,i} = R_{1,i} - (r_0 + b)\big(R_{1,i} - R_{0,i}\big) - \left(\sum_{n=1}^{N-1}(-1)^n(r_{n-1} + r_n)\big(R_{1,i} - R_{0,i}\big)\right)$$
$$- (-1)^N r_{N-1}(R_{1,i} - R_{0,i})$$

**6.** Procédé selon la revendication 4, **caractérisé en ce que** la formule d'échange d'origine est une formule d'échange logique construite avec des opérateurs logiques 'ET' et 'OU EXCLUSIVE' et est définie en fonction de la condition $b$ de bit d'entrée, du premier vecteur $R_{0,i}$, et du deuxième vecteur $R_{1,i}$, selon les deux équations suivantes :

$$R_{0,i} = R_{0,i} \oplus b \wedge \big(R_{1,i} \oplus R_{0,i}\big) \qquad R_{1,i} = R_{1,i} \oplus b \wedge (R_{1,i} \oplus R_{0,i})$$

et **en ce que** la formule d'échange masquée d'ordre N est définie en fonction de la condition b de bit d'entrée, du premier vecteur $R_{0,i}$, du deuxième vecteur $R_{1,i}$, et de N nombres aléatoires $r_0$,...., $r_{N-1}$, selon les deux équations suivantes :

$$R_{0,i} = R_{0,i} \oplus (r_0 \oplus b) \wedge \left(R_{1,0} \oplus R_{0,i}\right) \oplus \left( \bigoplus_{n=1}^{N-1} (r_{n-1} \oplus r_n) \wedge \left(R_{1,i} \oplus R_{0,i}\right) \right) \oplus r_{N-1}$$

$$\wedge \left(R_{1,i} \oplus R_{0,i}\right)$$

$$R_{1,i} = R_{1,i} \oplus (r_0 \oplus b) \wedge \left(R_{1,0} \oplus R_{0,i}\right) \oplus \left( \bigoplus_{n=1}^{N-1} (r_{n-1} \oplus r_n) \wedge \left(R_{1,i} \oplus R_{0,i}\right) \right) \oplus r_{N-1}$$

$$\wedge \left(R_{1,i} \oplus R_{0,i}\right)$$

7. Procédé selon la revendication 1 ou 2, **caractérisé en ce que** la formule d'échange d'origine est une formule d'échange arithmétique alternative construite avec des opérateurs arithmétiques et est définie en fonction de la condition $b$ de bit d'entrée, du premier vecteur $R_{0,i}$, et du deuxième vecteur $R_{1,i}$, selon les deux équations suivantes :

$$R_{0,i} = bR_{1,i} + (1-b)R_{0,i} \qquad R_{1,i} = bR_{0,i} + (1-b)R_{1,i}$$

et **en ce que** la formule d'échange masquée d'ordre N est construite à partir de ladite formule d'échange arithmétique alternative en utilisant en outre N nombres aléatoires $r_0,...., r_{N-1}$, selon les deux équations suivantes :

$$R_{0,i} = (b + r_0)R_{1,i} + \left(1 - (b + r_1)\right)R_{0,i} - (r_0 + r_2)R_{1,i} - (r_1 + r_2)R_{0,i}$$
$$+ \left( \sum_{n=2}^{N-1} (-1)^n (r_{n-1} + r_n) \left(R_{1,i} + R_{0,i}\right) \right) - (-1)^{N-1} r_{N-1}\left(R_{1,i} + R_{0,i}\right)$$

$$R_{1,i} = (b + r_0)R_{0,i} + \left(1 - (b + r_1)\right)R_{1,i} - (r_0 + r_2)R_{0,i} - (r_1 + r_2)R_{1,i}$$
$$+ \left( \sum_{n=2}^{N-1} (-1)^n (r_{n-1} + r_n) \left(R_{1,i} + R_{0,i}\right) \right) - (-1)^{N-1} r_{N-1}\left(R_{1,i} + R_{0,i}\right)$$

8. Procédé selon l'une quelconque des revendications précédentes, **caractérisé en ce que** la cryptographie asymétrique est basée sur des courbes elliptiques comportant une opération de multiplication scalaire entre un point générateur (P) d'une courbe elliptique et la clé secrète (k).

9. Procédé selon l'une quelconque des revendications 1 à 7, **caractérisé en ce que** la cryptographie asymétrique est une cryptographie de type RSA.

10. Circuit intégré comportant un ensemble de modules (3) de sécurisation configurés pour implémenter une opération de cryptographie asymétrique, ledit ensemble de modules (3) comprenant un module d'échange conditionnel (7) configuré pour échanger des premier et deuxième vecteurs ($R_0$, $R_1$) utilisés pour manipuler des bits d'entrées d'une clé secrète (k), ledit module d'échange conditionnel (7) étant adapté pour appliquer une formule d'échange comprenant une combinaison d'une condition (b) de bit d'entrée avec les premier et deuxième vecteurs ($R_0$, $R_1$) pour que ces derniers soient inter-changés uniquement si la condition (b) de bit d'entrée est égale à '1', **caractérisé en ce que** le module d'échange conditionnel (7) comprend un module de masquage (9) configuré pour faire appel à au moins un nombre aléatoire (r) pour masquer ladite formule d'échange avant qu'elle soit appliquée selon les étapes suivantes :

- tirer un premier nombre aléatoire,
- masquer la condition (b) de bit d'entrée en la combinant avec ledit premier nombre aléatoire,
- remplacer la condition de bit d'entrée contenu dans ladite formule d'échange par la condition de bit d'entrée masquée formant ainsi une première formule intermédiaire,
- introduire dans ladite première formule intermédiaire un premier terme de compensation fonction du premier nombre aléatoire pour former une formule d'échange masquée de premier ordre équivalente à ladite formule d'échange d'origine.

**11.** Dispositif embarqué comportant un microcontrôleur configuré pour implémenter le procédé de masquage selon l'une quelconque des revendications 1 à 7.

**12.** Système de masquage au sein d'un circuit intégré configuré pour implémenter une opération de cryptographie asymétrique, ladite implémentation comportant une opération d'échange conditionnelle entre des premier et deuxième vecteurs ($R_0$, $R_1$) utilisés pour manipuler des bits d'entrées d'une clé secrète (k), ladite opération d'échange conditionnelle étant adaptée pour appliquer une formule d'échange comprenant une combinaison d'une condition (b) de bit d'entrée avec les premier et deuxième vecteurs pour que ces derniers soient inter-changés uniquement si la condition (b) de bit d'entrée est égale à '1', **caractérisé en ce que** ledit système fait appel à au moins un nombre aléatoire pour masquer ladite formule d'échange avant qu'elle soit appliquée selon les étapes suivantes :

- tirer un premier nombre aléatoire,
- masquer la condition (b) de bit d'entrée en la combinant avec ledit premier nombre aléatoire,
- remplacer la condition de bit d'entrée contenu dans ladite formule d'échange par la condition de bit d'entrée masquée formant ainsi une première formule intermédiaire,
- introduire dans ladite première formule intermédiaire un premier terme de compensation fonction du premier nombre aléatoire pour former une formule d'échange masquée de premier ordre équivalente à ladite formule d'échange d'origine.

FIG.1

FIG.2

FIG.3

Europäisches
Patentamt

European
Patent Office

Office européen
des brevets

# RAPPORT DE RECHERCHE EUROPEENNE

Numéro de la demande

EP 20 17 1988

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Wouter De Groot: "A performance study of X25519 on Cortex-M3 and M4", , 1 septembre 2015 (2015-09-01), XP055659417, Extrait de l'Internet: URL:https://pure.tue.nl/ws/portalfiles/portal/47038543/800603-1.pdf [extrait le 2020-01-20] | 1,2,4, 8-12 | INV. H04L9/00 H04L9/30 |
| A | * abrégé * * Chapter 1: "Introduction"; pages 2,3 * * Chapter 3: "Implementation"; pages 10-14 * ----- | 3,5-7 | |
| X | ERICK NASCIMENTO ET AL: "Attacking embedded ECC implementations through cmov side channels", IACR, INTERNATIONAL ASSOCIATION FOR CRYPTOLOGIC RESEARCH, vol. 20160924:220308, 22 septembre 2016 (2016-09-22), pages 1-22, XP061021827, | 1,2,4, 8-12 | DOMAINES TECHNIQUES RECHERCHES (IPC) |
| A | * abrégé * * Chapter 4: "Attacking arithmetic cswaps" * * Chapter 7: "Conclusions and Possible Countermeasures" * ----- | 3,5-7 | H04L |

Le présent rapport a été établi pour toutes les revendications

| Lieu de la recherche | Date d'achèvement de la recherche | Examinateur |
|---|---|---|
| Munich | 3 août 2020 | Di Felice, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

**EP 3 734 899 A1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J.-S. CORON.** gainst Differential Power Analysis for Elliptic Curve Cryptosystems. *Cryptographique Hardware and Embedded Systems,* 1999

- **M. JOYE ; S.-M. YEN.** The Montgomery powering ladder. *International Workshop on Cryptographic Hardware and Embedded Systems,* 2002, 291-302